# FASCICULE DE BREVET EUROPEEN

(11) **EP 2 337 739 B1**
(45) Date de publication et mention de la délivrance du brevet: **11.12.2013**
(21) Numéro de dépôt: 09736833.6
(22) Date de dépôt: 07.10.2009
(51) Int. Cl.: B64D 11/06

(54) **UNITE DE SIEGE PASSAGER**
FAHRGASTSITZEINHEIT
PASSENGER SEAT UNIT

(30) Priorité: 15.10.2008 FR 0805694
(43) Date de publication de la demande: 29.06.2011
(73) Titulaire: Recaro Aircraft Seating GmbH & Co. KG, 74523 Schwäbisch Hall (DE)
(72) Inventeur: JAKUBOWSKI, Jens, 73527 Schwäbisch Hall (DE); JUSSLI, Zoltan, 74182 Obersulm-Willsbach (DE)
(74) Mandataire: Daub, Thomas
(86) Numéro de dépôt international: PCT/EP2009/007198
(87) Numéro de publication internationale: WO 2010/043329

(56) Documents cités:
- EP-A- 0 322 930
- WO-A-99/41104
- DE-A1-102007 005 143
- DE-A1-102007 053 958
- DE-C1- 4 015 872
- FR-A- 2 855 470
- US-A- 3 877 747
- US-A1- 2006 071 529

## Description

L'invention concerne une unité de siège passager pour un moyen de transport avec au moins deux classes de confort, en particulier une unité de siège passager pour un aéronef.

Le brevet européen EP 0 148 619 B1 décrit une unité de siège passager correspondant à une rangée de trois sièges. La rangée peut être utilisée pour deux classes de confort différentes. A cette fin, le siège central peut être converti d'une première configuration, dans laquelle un élément mobile du siège sert d'élément de dossier, en une seconde configuration, dans laquelle cet élément mobile est rabattu par un pivotement vers l'avant et sert d'accoudoir pour un passager assis sur un des sièges extérieurs de la rangée.

L'invention vise à développer une unité de siège passager semblable à celle décrite ci-dessus, dans laquelle une conversion de l'unité de siège passager entre deux configurations de classe de confort peut être réalisée rapidement et manoeuvrée de manière simple.

A cet effet, l'invention prend comme point de départ une unité de siège passager pour un moyen de transport avec au moins deux classes de confort, en particulier unité de siège passager pour un aéronef, comprenant une unité de siège et une unité de conversion destinée pour une conversion d'une première configuration de classe de confort en une deuxième configuration de classe de confort, l'unité de conversion comprenant au moins un moyen de conversion et une unité de guidage destinée à guider le moyen de conversion dans un mouvement relatif à une unité de dossier lors d'une opération de conversion, l'unité de guidage étant prévue pour guider le moyen de conversion de telle sorte qu'il réalise un mouvement translationnel relativement à l'unité de dossier, l'unité de siège étant montée de manière à être pivotée relativement à l'unité de dossier entre une première position associée à la première configuration de classe de confort et une deuxième position associée à la deuxième configuration de classe de confort. Une unité de siège passager de ce type est connu du document DE 102007005143 A1.

Il est proposé de prévoir une unité (80) de verrouillage destinée à un verrouillage dans au moins une des configurations de classe de confort, et une unité (86) de commande destinée à déverrouiller le moyen (50) de conversion et l'unité (76) de siège simultanément.

De cette manière, il est possible de réaliser une conversion de l'unité de siège passager de manière simple et rapide avec un grand confort d'utilisation. Dans l'invention, il est donc proposé que l'unité de siège passager comporte une unité de verrouillage destinée à un verrouillage dans au moins une des configurations de classe de confort et une unité de commande destinée à déverrouiller le moyen de conversion et l'unité de siège simultanément. De cette manière, une manoeuvre de conversion peut être réalisée de manière simple et rapide. Sous le terme de déverrouillage « simultané » doit être compris en particulier une opération dans laquelle le moyen de conversion et l'unité de siège sont déverrouillés à l'aide d'une seule manoeuvre d' actionnement de l'unité de commande, le moyen de conversion et l'unité de siège pouvant être, lors de cette manoeuvre, déverrouillés au même moment ou à des instants différents, en particulier des instants légèrement décalés. En particulier, l'unité de siège passager forme une rangée d'au moins trois sièges orientée par exemple transversalement à une direction de déplacement du moyen de transport. Dans cette configuration, le moyen de conversion est formé de manière avantageuse par au moins un élément constitutif d'un siège central, c.-à-d. d'un siège étant jouxté par au moins deux sièges adjacents. Sous le terme « unité de dossier » doit être comprise en particulier une unité s'élevant au-dessus et - relativement à une direction d'assise - à l'arrière d'une surface d'assise. Cette unité, qui peut être.fixe ou pivotable par rapport à la surface d'assise, peut former une surface d'appui destinée à supporter le dos d'un passager ou bien servir de support, direct ou indirect, pour un élément formant cette surface d'appui. Sous le terme « mouvement translationnel » doit être compris en particulier un mouvement s'effectuant le long d'une direction rectiligne. Ce mouvement peut être défini comme le mouvement du centre de masse du moyen de conversion relativement à l'unité de dossier, ce mouvement s'effectuant le long d'une trajectoire rectiligne. L'unité de guidage est « prévue » pour guider le moyen de conversion de telle sorte qu'il réalise un mouvement translationnel relativement à l'unité de dossier en ce sens qu'elle est construite et/ou équipée de telle manière à ce que le centre de masse du moyen de conversion suive une trajectoire rectiligne. De préférence, l'unité de guidage est prévue pour que le moyen de conversion réalise - entre une première position associée à la première configuration de classe de confort et une deuxième position associée à la deuxième configuration de classe de confort - exclusivement un mouvement translationnel relativement à l'unité de dossier.

Le moyen de conversion possède de préférence au moins une fonction d'une partie conventionnelle d'un siège passager. Par exemple, le moyen de conversion peut servir d'élément de dossier mobile par rapport à une autre partie du dossier, cette partie formant l'unité de dossier au sens de l'invention. Cet élément de dossier peut former dans au moins une des configurations de classe de confort une surface de support pour le dos d'un passager. Une structure compacte et facile à manipuler peut cependant être obtenue si l'unité de guidage comprend au moins un moyen de guidage et le moyen de conversion est formé par une unité d'appuie-tête qui peut être guidée par le moyen de guidage. De plus, une différentiation optique aisée entre deux configurations de classe de confort par des positions différentes de l'unité d'appuie-tête par rapport à l'unité de dossier peut être ainsi obtenue. Sous le terme « unité d'appuie-tête » doit être comprise en particulier une unité formant au moins une surface d'appui pour la tête d'un passager. En particulier, l'unité d'appuie-tête peut comprendre une structure destinée à supporter un rembourrage formant la surface d'appui ainsi que ce rembourrage, la structure étant mobile par rapport à l'unité de dossier et correspondant de manière avantageuse au moyen de conversion. Dans cette réalisation de l'invention, une construction simple et compacte peut être obtenue si l'unité d'appuie-tête comprend une unité de support pour supporter un rembourrage d'appuie-tête, l'unité de support étant couplée au moyen de guidage, en particulier couplée directement.

De manière avantageuse, une construction simple peut être obtenue si l'unité de guidage comporte au moins un moyen de guidage formé comme barre de guidage.

Une réduction de l'espace requis peut être en outre obtenue si l'unité de guidage comprend un premier moyen de guidage et au moins un deuxième moyen de guidage, dans lequel le premier moyen de guidage peut être introduit.

Selon une réalisation de l'invention; l'unité de siège passager comprend une unité de cadre de structure de dossier de l'unité de dossier, cette unité de cadre formant au moins un premier moyen de guidage de l'unité de guidage. De cette manière, une réalisation compacte de l'unité de guidage par l'utilisation de parties conventionnelles existantes ou au moins de l'espace prévu pour de telles parties peut être obtenue.. Sous le terme « unité de cadre de structure de dossier » doit être comprise en particulier une unité comprenant des éléments, en particulier des éléments de forme oblongue, qui, en coopération, forment une structure présentant la forme d'un cadre, au moins d'un cadre partiel, par exemple en forme de « U », et dont la fonction principale est d'absorber et/ou de transmettre des forces, en particulier des forces de torsion, auxquelles sont soumises un siège. En outre, dans la configuration évoquée ci-dessus, dans laquelle l'unité de guidage comprend au moins un premier moyen de guidage et le moyen de conversion est formé par une unité d'appuie-tête qui peut être guidée par le moyen de guidage, l'unité de guidage comprenant au moins un deuxième moyen de guidage, dans lequel le premier moyen de guidage peut être introduit, l'unité de cadre forme avantageusement le deuxième moyen de guidage, de manière à encore réduire l'espace nécessaire.

De plus, il est proposé que le moyen de guidage formé par l'unité de cadre soit formé par un élément vertical de cadre de l'unité de cadre. De cette manière, un guidage du moyen de conversion dans la direction verticale peut être obtenu à l'aide d'une construction simple. Sous le terme « élément vertical » il doit être compris en particulier un élément formé de préférence de manière oblongue dont la direction principale d'extension correspond à la direction principale d'extension de l'unité de dossier. Lorsque le dossier se trouve dans une position droite, cette direction principale d'extension de l'unité de dossier correspond à la direction verticale. Dans ce texte, le terme de direction « verticale » doit être compris en particulier comme une direction orientée perpendiculairement au plan formé par le sol du moyen de transport.

Dans une réalisation avantageuse de l'invention, l'unité de cadre forme deux moyens de guidage qui sont reliés entre eux par un élément de torsion, ce qui permet d'obtenir une structure compacte et robuste. Sous le terme « élément de torsion » doit être compris en particulier un élément dont la fonction principale est de transmettre une force de torsion, appliquée à l'unité de dossier, à une autre partie de siège, de manière à éviter un dommage de l'unité de dossier. De cette manière, une grande flexibilité dans l'arrangement de l'unité de siège passager dans les deux classes de confort peut être obtenue. L'unité de siège possède avantageusement une fonction d'une partie conventionnelle de siège dans au moins une des positions associées à une configuration de classe de confort, comme par exemple la fonction de partie de dossier, d'accoudoir, d'assise etc. Dans une configuration particulièrement avantageuse, l'unité de siège possède dans la première position une fonction différente de la fonction qu'elle possède dans la deuxième position. Un plus grand confort d'utilisation peut en outre être obtenu si l'unité de siège comporte une unité d'actionnement qui pivote automatiquement l'unité de siège, en particulier de la première position vers la deuxième position, lors d'un actionnement de l'unité de commande. L'unité de siège peut, dans une réalisation particulière, être pivotée automatiquement dans une position intermédiaire stable entre la première et la deuxième position, par exemple une position correspondant à un point mort d'une unité de ressort.

Une construction simple et peu coûteuse peut être obtenue si l'unité d'actionnement comporte une unité de ressort, en particulier un ressort pneumatique.

Outre l'utilisation pour une conversion de l'unité de siège passager d'une première classe de confort en une deuxième classe de confort, l'invention permet une transformation simple et rapide de l'unité de passager en une configuration permettant le placement d'une civière entre deux rangées de sièges lors du transport d'un patient.

On décrira maintenant à titre d`exemple non limitatif un mode de réalisation particulier de l'invention en référence aux dessins schématiques annexés dans lesquels :
- la figure 1 est une représentation d'une rangée de siège d'aéronef vue de l'avant dans une configuration correspondant à une première classe de confort,
- la figure 2 est une représentation de la rangée de la figure 1 dans une configuration correspondant à une deuxième classe de confort,
- la figure 3 est une vue de détail du siège central de la rangée des figures précédentes dans la configuration de la figure 1,
- la figure 4 correspond à la vue de détail de la figure 3, le siège central se trouvant dans la configuration de la figure 2,
- la figure 5 est une représentation du siège central vu en perspective, avec une unité de guidage pour guider la partie supérieure du siège central lors d'une manoeuvre de conversion du siège de la première configuration en la deuxième configuration,
- la figure 6 est une vue de détail de l'unité de guidage et
- la figure 7 est une vue de la partie supérieure de la figure 5, avec une représentation schématique d'une unité de commande, d'une unité de verrouillage et d'une unité d'actionnement.

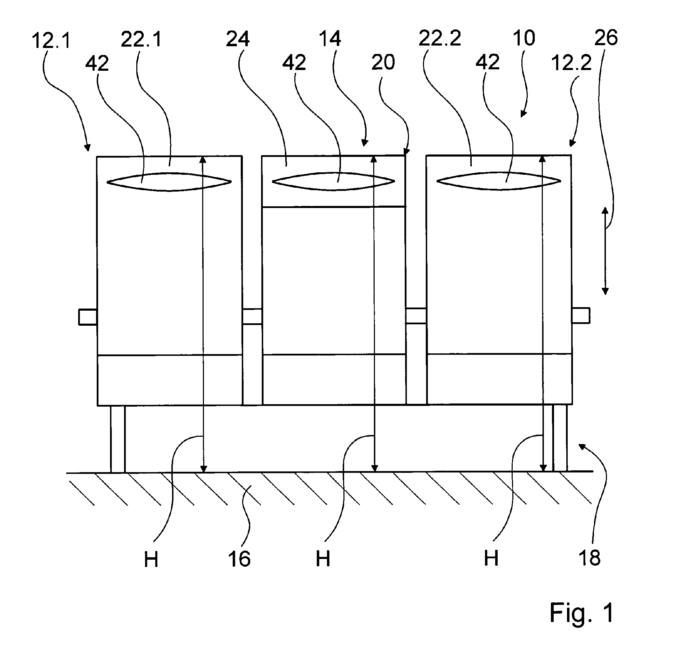

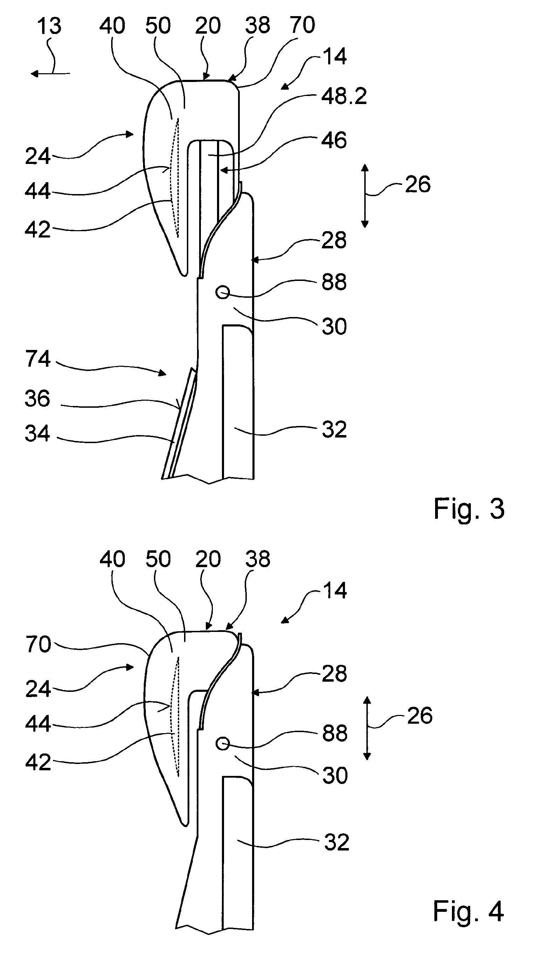

La figure 1 représente de manière schématique une unité 10 de siège pour passagers destinée à être utilisée dans un moyen de transport. Dans l'exemple considéré, l'unité 10 de siège pour passagers est destinée à être utilisée dans un aéronef. L'unité 10 de siège pour passagers forme une rangée de trois sièges 12.1, 12.2 et 14 orientée perpendiculairement à la direction de vol 13 de l'aéronef (figure 3). La rangée comporte en ses extrémités latérales deux sièges 12.1 et 12.2, qui seront désignés dans la suite par l'expression « siège extérieur », ainsi qu'en son milieu le siège 14, qui sera désigné dans la suite par l'expression « siège central ». L'unité 10 de siège passager est fixée au sol 16 de la cabine d'aéronef au moyen d'une unité de support 18.

L'unité 10 de siège passager comporte une unité de conversion 20 permettant de convertir une configuration de l'unité 10 pour un usage correspondant à une première classe de confort en une configuration de l'unité 10 pour un usage correspondant à une deuxième classe de confort.

La figure 1 représente l'unité 10 de siège passager dans une configuration associée à la première classe de confort correspondant dans l'exemple considéré à la classe « économique ». Dans cette configuration de l'unité 10, les sièges extérieurs 12.1 et 12.2 ainsi que le siège central 14 sont destinés à accueillir des passagers. Les sièges 12.1, 12.2 et 14 présentent chacun une région 22.1, 22.2 et 24, respectivement, ayant la fonction d'appuie-tête, les régions 22.1, 22.2 et 24 étant situées à la même hauteur H par rapport au sol 16 de la cabine d'aéronef. Le siège central 14 présente dès lors la même hauteur H par rapport au sol 16 que les sièges extérieurs 12.1 et 12.2. La hauteur H d'une région 22 ou 24 correspond à la distance entre le sol 16 et l'extrémité supérieure de la région respective dans la direction verticale 26 perpendiculaire au sol 16.

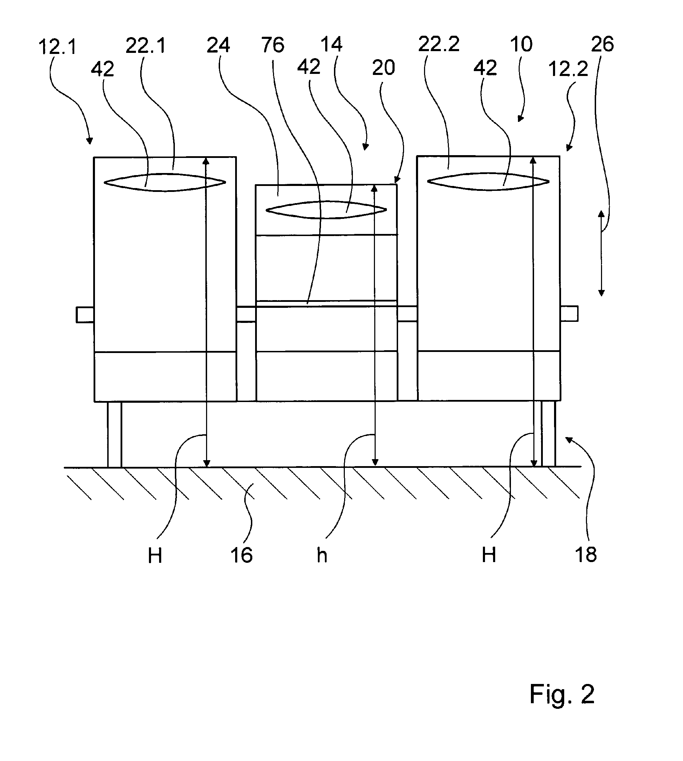

La figure 2 représente l'unité 10 de siège passager dans une configuration associée à la deuxième classe de confort correspondant dans l'exemple considéré à une classe «affaire». Dans cette configuration de l'unité 10, les sièges extérieurs 12.1 et 12.2 uniquement sont destinés à accueillir des passagers, le siège central 14 ayant pour fonction de créer un espace inoccupé séparant les deux sièges extérieurs 12.1 et 12.2. Les régions 22.1 et 22.2 des sièges extérieurs 12.1 et 12.2 respectivement présentent une hauteur H par rapport au sol 16 identique et correspondant à la hauteur H de la configuration selon la figure 1. La région 24 du siège central 14 présente quant à elle une hauteur h par rapport au sol 16 qui est inférieure à la hauteur H des régions 22.1 et 22.2 avoisinantes. La transformation de l'unité 10 de siège passager s'effectue par une translation de la région 24 d'appui-tête du siège central 14 dans la direction verticale 26 vers le bas, c.-à-d. en direction du sol 16, à l'aide de l'unité 20 de conversion décrite en détail ci-dessous.

Les figures 3 et 4 représentent une vue détaillée de la partie supérieure du siège central 14 avec la région 24 dans la première et la deuxième configuration de l'unité 10 de siège passager, respectivement. Le siège central 14 comporte une unité 28 de dossier. Celle-ci présente une structure rigide 30, sur la face arrière de laquelle est fixée une table 32 de manière pivotante. Dans la première configuration, une structure supportant un rembourrage 34 est fixée sur la face avant de la structure 30, ce rembourrage 34 formant une surface 36 d'appui pour le dos d'un passager. La région 24 visible dans les figures 1 et 2 est formée par une unité 38 d'appuie-tête comportant une unité 40 de support supportant sur sa face avant un rembourrage 42 d'appuie-tête (voir aussi les figures 1 et 2) formant une surface 44 d'appui pour la tête d'un passager. L'unité 40 de support forme sur son côté supérieur l'extrémité supérieure du siège 14.

L'unité 28 de dossier peut être construite fixe ou inclinable par rapport à une partie d'assise (non représentée). Dans ce texte, l'orientation des parties de l'unité 10 de siège passager par rapport à une direction ou un plan de référence comme par exemple la direction verticale 26 ou le sol 16 de l'aéronef, est décrite en supposant que l'unité 28 de dossier occupe une position droite par rapport à la partie d'assise. Dans cette position droite, la direction principale d'extension de l'unité 28 de dossier correspond à la direction verticale 26.

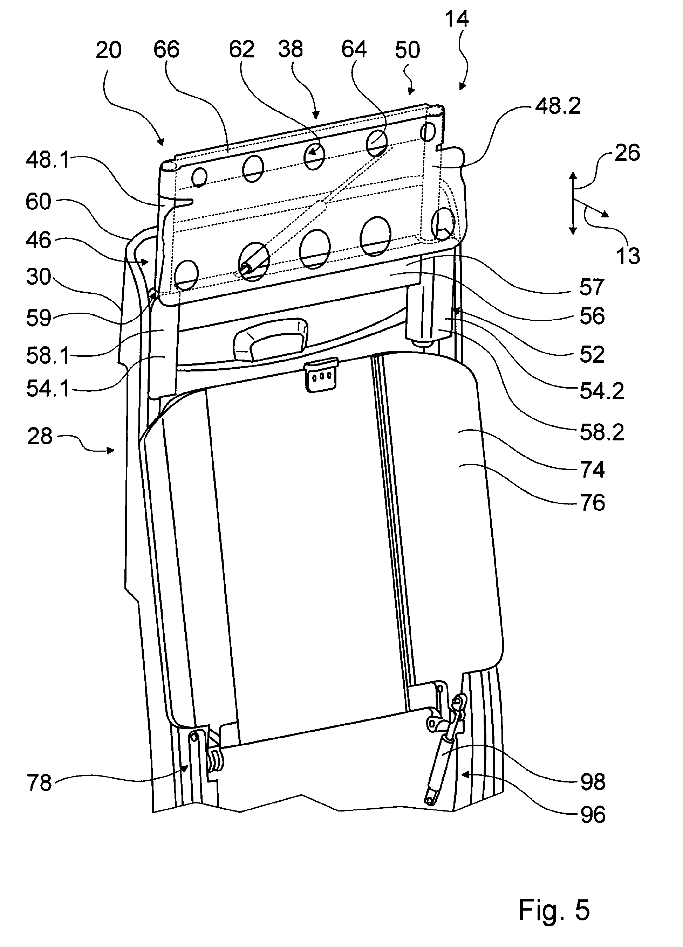

L'unité 38 d'appuie-tête est reliée à la structure rigide 30 de dossier par l'intermédiaire d'une unité 46 de guidage comportant au moins un moyen 48 de guidage formé comme barre de guidage. L'unité 46 de guidage sera décrite ci-dessous plus en détail à l'aide de la figure 5. La conversion de l'unité 10 de siège passager de la première configuration (figures 1 et 3) en la deuxième configuration (figures 2 et 4) s'effectue par une translation de l'unité 38 d'appuie-tête dans la direction verticale 26 vers le bas. L'unité 38 d'appuie-tête sert dès lors de moyen de conversion de l'unité 20 de conversion et est désignée dans les figures comme moyen 50 de conversion. L'unité 46 de guidage sert à guider le moyen 50 de conversion relativement à l'unité 28 de dossier, en particulier à la structure rigide 30 de l'unité 28 de dossier. Selon l'invention, l'unité 46 de guidage est prévue de manière à guider le moyen 50 de conversion dans un mouvement de translation relatif à l'unité 28 de dossier. L'unité 46 de guidage comporte deux moyens 48.1 et 48.2 de guidage formés comme barre creuse de guidage, comme représenté dans la figure 5. L'unité 40 de support de l'unité 38 d'appuie-tête est couplée aux moyens 48.1 et 48.2 de guidage, ce qui permet un mouvement de l'unité 40 de support par rapport à l'unité 28 de dossier lorsqu'une force est appliquée à l'unité 40 de support.

La figure 5 représente une vue de face du siège central 14. Comme indiqué dans le texte ci-dessus, l'unité 28 de dossier comporte la structure rigide 30. L'unité 28 de dossier comporte de plus une unité 52 de cadre de structure de dossier avec des éléments de cadres 54.1, 54.2 et 56. L'unité 52 de cadre est construite de manière semi rectangulaire en forme de U avec deux éléments 54.1 et 54.2 de cadre orientés dans la direction verticale 26 et un élément 56 de cadre reliant les éléments 54 de cadre verticaux et orienté horizontalement par rapport au sol 16 de l'aéronef. Les éléments 54 de cadre verticaux forment chacun avec l'élément horizontal 56 de cadre de préférence un angle droit. L'élément horizontal 56 est fixé aux éléments 54.1, 54.2 de cadre verticaux par exemple au moyen de rivets (non représentés). L'élément horizontal 56 de cadre est fabriqué de préférence par un procédé d'extrusion. L'unité 52 de cadre est montée de telle sorte qu'elle est immobile par rapport à la structure rigide 30 de l'unité 28 de dossier. L'élément horizontal 56 de cadre sert comme élément 57 de torsion. De cette manière, les forces de torsion appliquées à l'unité 28 de dossier peuvent être transmises à d'autres parties du siège 14, en particulier des parties inférieures du siège 14 dans la région d'une assise, par l'intermédiaire des éléments 54.1 et 54.2 de cadre verticaux.

Selon un aspect de l'invention, l'unité 52 de cadre forme au moins un moyen de guidage de l'unité 46 de guidage. Dans l'exemple considéré, les deux éléments 54.1 et 54.2 de cadre verticaux forment chacun un moyen de guidage désignés dans la figure comme moyens de guidage 58.1 et 58.2 respectivement. De par leur construction, les moyens 48.1 et 58.1 de guidage ainsi que les moyens 48.2 et 58.2 de guidage se correspondent l'un l'autre et sont prévus de manière à s'imbriquer l'un dans l'autre. Les moyens de guidage 58.1 et 58.2 faisant également partie de l'unité 52 de cadre sont reliés entre eux par l'élément 57 de torsion et chacun formés comme élément de réception ou réceptacle destiné à recevoir un des moyens 48.1, 48.2 de guidage. Ces moyens 58.1, 58.2 de guidage sont fabriqués de préférence dans un procédé de fraisage et/ou d'extrusion. A la surface supérieure de chacun des moyens 58 de guidage, une ouverture 59 adaptée à la forme des moyens 48 de guidage est prévue, par laquelle un des moyens 48 de guidage peut être inséré dans le moyen 58 de guidage. Dans l'exemple considéré, les moyens 48 de guidage étant formés comme barres creuses de guidage cylindriques, l'ouverture 59 des moyens 58 de guidage est circulaire.

Lors d'une manoeuvre de conversion de l'unité 10 de siège passager, les moyens 48 de guidage, qui possèdent une direction principale d'extension correspondant à la direction verticale 26 sont introduits dans les moyens 58 de guidage ou en sont retirés de manière translationnelle le long de la direction verticale 26 produisant un mouvement translationnel du moyen 50 de conversion, c.-à-d. dans le cas considéré de l'unité 38 d'appuie-tête.

La structure 30 rigide de l'unité 28 de dossier présente une partie 60 supérieure qui dépasse en hauteur l'unité 52 de cadre et entoure celle-ci sur trois côtés adjacents. En particulier, la partie 60 recouvre l'unité 52 de cadre par l'arrière et sur les faces de côté adjacentes à la face arrière, de sorte que l'unité 52 de cadre est invisible pour un passager situé dans une rangée derrière l'unité 10 de siège passager ou assis sur un des sièges extérieurs 12.1 et 12.2.

Les deux moyens 48 de guidage sont reliés entre eux par un moyen 62 de liaison. Le moyen 62 de liaison comporte un élément transversal 64 allongé qui est orienté horizontalement par rapport au sol 16. L'élément transversal 64 est fabriqué de préférence par un procédé d'extrusion. Le moyen 62 de liaison présente également des éléments de jonction, non représentés dans la figure, ayant chacun la fonction de relier l'élément transversal 64 à un des moyens 48 de guidage. En particulier, le moyen 62 de liaison comporte des éléments en forme de goujon muni d'un anneau de fixation, ces éléments étant fixés à l'élément transversal 64. Les éléments de jonction peuvent être fixés à l'élément transversal 64 au moyen de rivets (non représentés). Les moyens 48 et 58 de guidage, le moyen 62 de liaison et l'élément horizontal 56 forment une structure rectangulaire, à l'aide de laquelle des forces appliquées à l'unité 38 d'appuie-tête peuvent être transmises à l'unité 52 de cadre.

Le moyen 62 de liaison sert de support à un élément 66 de structure de l'unité 40 de support de l'unité 38 d'appui-tête. Cet élément 66 de structure, qui peut être fixé à l'élément transversal 64 au moyen de rivets (non représentés), est formé par une tôle présentant une surface principale perpendiculaire à la direction de vol 13 et fabriquée de préférence dans un procédé d'emboutissage.

L'élément 66 de structure sert de support pour un élément 70 en matière plastique portant le rembourrage 42 d'appuie-tête (figure 3) et formant la surface extérieure, visible pour un passager, de l'unité 38 d'appuietête. En particulier, l'élément 70, visible dans les figures 3 et 4 peut être fabriqué du même matériau que la structure rigide 30 du dossier afin de donner au siège 14 un aspect homogène, en particulier lorsque le siège 14 est utilisé dans la première configuration de confort de la figure 1. La surface de l'élément 66 de structure présente également une structure de relief non représentée dans la figure pouvant servir pour un emboîtement avec l'élément 70.

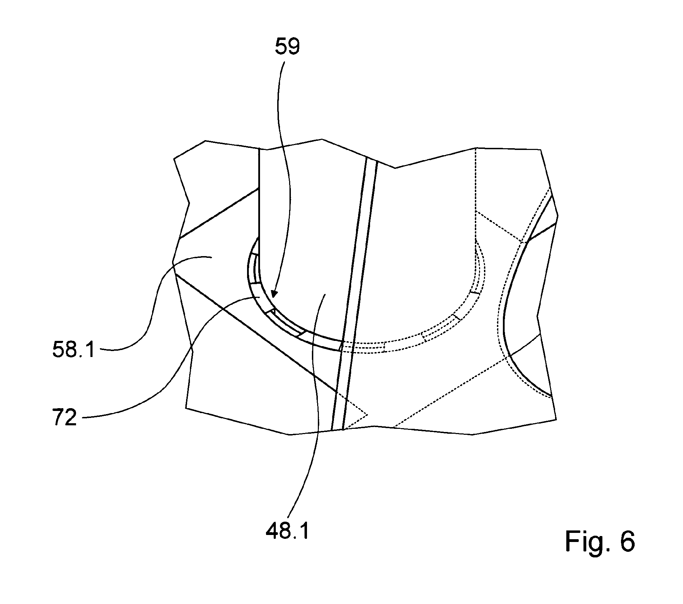

La figure 6 représente une vue détaillée de la partie supérieure d'un des moyens 58 de guidage. Comme indiqué ci-dessus, ceux-ci présentent chacun une ouverture 59 dans laquelle un des moyens 48 de guidage est introduit. Chaque ouverture 59 est munie d'éléments 72 destinés à faciliter le coulissement du moyen 48 de guidage dans l'ouverture 59. Ces éléments 72 sont montés sur une structure en forme d'anneau qui, lors du montage, est introduite par pression dans l'ouverture 59 correspondante.

L'unité de conversion 20 comporte un deuxième moyen 74 de conversion destiné à convertir l'unité 10 de la première configuration de confort en la deuxième configuration de confort. Ce moyen 74 de conversion correspond à une unité 76 de siège qui peut être déplacée par pivotement entre une première position associée à la première configuration de confort de la figure 1, dans laquelle l'unité 76 de siège se trouve en position relevée de manière à servir d'élément de dossier, et une deuxième position associée à la deuxième configuration de la figure 2, dans laquelle l'unité 76 de siège se trouve en position abaissée de manière à servir d'accoudoir ou d'élément de table pour le dépôt d'objets. Dans la figure 5, l'unité 76 de siège est montrée dans sa position relevée. La face de l'unité 76 de siège qui, dans la position relevée de celle-ci, est orientée vers l'avant dans la direction 13 de vol, présente le rembourrage 34 visible dans la figure 3 et formant la surface d'appui 36. De manière à simplifier la représentation, le rembourrage 34 n'est pas représenté dans la figure 5. L'unité 76 de siège est reliée à la structure 30 de dossier par l'intermédiaire d'une unité 78 de pivotement destinée à faire pivoter l'unité 76 de siège entre les deux positions décrites ci-dessus.

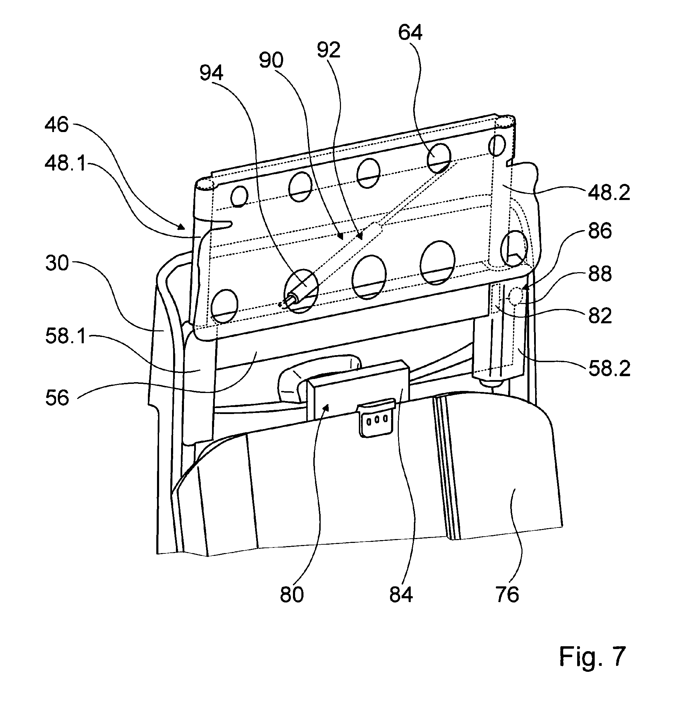

L'unité 10 de siège passager présente de plus une unité 80 de verrouillage permettant de verrouiller les moyens de conversion 50 (unité 38 d'appuie-tête) et 74 (unité 76 de siège) dans leurs positions respectives associées à la première et à la deuxième configuration de confort. L'unité 80 de verrouillage ainsi que les procédures de verrouillage et déverrouillage seront décrites à l'aide de la figure 7 représentant la partie supérieure de la figure 5.

L'unité 80 comporte un moyen 82 de verrouillage destiné à verrouiller le moyen 50 de conversion (unité 38 d'appuie-tête) dans les deux positions associées aux deux configurations de confort. Dans l'exemple considéré, le moyen 82 de verrouillage est intégré dans le moyen de guidage 58.2 et permet un blocage du mouvement du moyen 48.2 de guidage lui correspondant. Bien entendu, d'autres configurations pour le placement du moyen 82 de verrouillage de manière à bloquer un mouvement relatif entre les moyens 48 et 58 de guidage sont envisageables. L'unité 80 de verrouillage comporte de plus un moyen de verrouillage 84 destiné à verrouiller le moyen 74 de conversion (unité 76 de siège) dans sa position relevée dans laquelle celui-ci sert d'élément de dossier. Les moyens 82 et 84 de verrouillage ne sont - pour la clarté des dessins - par représentés en détail. Ceux-ci peuvent être par exemple munis de crans d'arrêt afin d'assurer un blocage en position et ainsi un verrouillage automatique, lorsqu'une des positions correspondant aux configurations de classe de confort est atteinte.

L'unité 10 de siège passager comporte de plus une unité 86 de commande destinée à initier un processus de déverrouillage des moyens 50 et 74 de conversion. L'unité 86 de commande présente un élément 88 de commande sous la forme d'un bouton de commande fixé sur une paroi latérale de la structure rigide 30 de l'unité 28 de dossier, actionnable manuellement par un membre du personnel de bord et visible dans les figures 3 et 4. Bien entendu, un arrangement alternatif de l'élément 88 de commande, comme par exemple une fixation à l'unité 38 d'appuietête, est envisageable. L'élément 88 de commande est représenté de manière schématique par un cercle hachuré dans la figure 7. L'unité 86 de commande est reliée aux moyens 82 et 84 de verrouillage de manière à ce qu'une pression sur l'élément 88 de commande initialise simultanément un processus de déverrouillage des moyens 82 et 84 de verrouillage. La liaison de l'élément 88 de commande aux moyens 82, 84 de verrouillage est représentée également de manière schématique. Elle peut par exemple être formée par un câble Bowden, une bascule, une barre rigide, etc.

L'unité 10 de siège passager comporte de plus une unité 90 d'actionnement destinée à provoquer de manière automatique un mouvement des moyens 50 et 74 de conversion relativement à l'unité 28 de dossier, lorsque les moyens 82, 84 de verrouillage correspondants sont dans leur état de déverrouillage. L'unité 90 d'actionnement comporte un premier moyen d'actionnement sous la forme d'une unité 92 de ressort et destiné à provoquer un déplacement du moyen 50 de conversion relativement à la structure 30 vers le haut. Dans l'exemple considéré, l'unité 92 de ressort comporte un ressort pneumatique 94. Bien entendu, d'autres formes pour un élément de ressort sont envisageables. L'unité 92 de ressort est fixée à une première extrémité à l'élément 56 horizontal de cadre, qui est immobile par rapport à la structure rigide 30 de l'unité 28 de dossier, et à une seconde extrémité à l'élément transversal 64 du moyen de liaison 62, qui est, par l'intermédiaire de l'unité 46 de guidage, mobile par rapport à la structure rigide 30 de l'unité 28 de dossier. La force de ressort emmagasinée par l'unité 92 de ressort permet dès lors de provoquer de manière automatique un mouvement du moyen 50 de conversion par rapport à la structure 30, comme il sera expliqué plus en détail ci-dessous.

L'unité 90 d'actionnement comporte en outre un deuxième moyen d'actionnement sous la forme d'une unité 96 de ressort et destiné à provoquer un mouvement de pivotement du moyen 74 de conversion par rapport à la structure 30. L'unité 96 de ressort est située dans à région inférieure de l'unité 76 de siège, lorsque celle-ci se trouve dans sa position relevée, et est représentée dans la figure 5. L'unité 96 de ressort comporte un ressort pneumatique 98 étant fixé à une extrémité à un élément fixe par rapport à la structure 30 et à une autre extrémité à l'unité 76 de siège. La force de ressort emmagasinée par l'unité 96 de ressort permet dès lors de provoquer de manière automatique un mouvement de pivotement du moyen 74 de conversion par rapport à la structure 30.

Les opérations de conversion de l'unité 10 de siège passager entre les deux configurations de confort seront maintenant décrites en détail. On supposera que l'unité 10 se trouve dans la configuration correspondant à la première classe de confort, comme représenté dans les figures 1 et 3. Les moyens 50 et 74 de conversion sont verrouillés dans leur position respective associée à cette première configuration à l'aide des moyens 82 et 84 de verrouillage respectifs. L'unité 86 de commande est prévue pour déverrouiller de manière simultanée le moyen 50 de conversion et l'unité 76 de siège. Un membre du personnel de bord presse sur l'élément 88 de commande, provoquant ainsi un déverrouillage des moyens 82, 84 de verrouillage. L'unité 92 de ressort provoque de manière automatique un mouvement du moyen 50 de conversion vers le haut sur une petite distance, par exemple 5 mm. Par ce déplacement vers le haut, le personnel de bord peut rapidement constater que le moyen 50 de conversion se trouve dans son état déverrouillé et est donc prêt à être actionné manuellement. Simultanément, le déverrouillage de l'unité 76 de siège initié par l'actionnement de l'élément 88 de commande provoque de manière automatique par l'intermédiaire de l'unité 90 d'actionnement, en particulier de l'unité 96 de ressort, un mouvement de pivotement de l'unité 76 de siège dans sa position abaissée représentée dans la figure 1 où elle est arrêtée grâce à des moyens d'arrêts (non représentés). A cette fin, l'unité 96 de ressort se trouve dans son état tendu, ou état de plus grande énergie, lorsque l'unité 76 de siège se trouve dans sa position relevée. Un déverrouillage de l'unité 76 de siège provoque dès lors automatiquement le mouvement de basculement de celle-ci grâce à l'énergie libérée par l'unité 96 de ressort. Le moyen 50 de conversion, c'est-à-dire l'unité 38 d'appuie-tête, est déplacée par le membre du personnel de bord verticalement vers le bas par l'application d'une force sur la partie supérieure de l'unité 40 de support de l'unité 38 d'appui-tête. Le moyen 50 de conversion est ainsi déplacé vers le bas sur une distance de par exemple 90 mm jusqu'à être verrouillé par le moyen 82 de verrouillage dans la position inférieure correspondant à la deuxième configuration de classe confort. Lors de ce déplacement, l'unité 92 de ressort gagne en énergie, de sorte que l'unité 92 de ressort se trouve dans un état tendu lorsque le moyen 50 de conversion se trouve dans sa position abaissée.

Pour convertir l'unité 10 de siège passager de la deuxième configuration de classe confort en la première configuration de classe confort, le membre du personnel de bord actionne à nouveau l'élément 88 de commande provoquant un déverrouillage du moyen 50 de conversion. L'énergie libérée par l'unité 92 de ressort est utilisée par l'unité 90 d'actionnement pour déplacer de manière automatique le moyen 50 de conversion de sa position abaissée correspondant à la deuxième configuration de classe de confort vers sa position relevée correspondant à la première configuration de classe de confort.

## Revendications

1. Unité de siège passager pour un moyen de transport avec au moins deux classes de confort, en particulier unité de siège passager pour un aéronef, comprenant une unité (76) de siège et une unité (20) de conversion destinée pour une conversion d'une première configuration de classe de confort en une deuxième configuration de classe de confort, l'unité de conversion (20) comprenant au moins un moyen (50) de conversion et une unité (46) de guidage destinée à guider le moyen (50) de conversion dans un mouvement relatif à une unité (28) de dossier lors d'une opération de conversion, l'unité (46) de guidage étant prévue pour guider le moyen (50) de conversion de telle sorte qu'il réalise un mouvement translationnel relativement à l'unité (28) de dossier, l'unité (76) de siège étant montée de manière à être pivotée relativement à l'unité (28) de dossier entre une première position associée à la première configuration de classe de confort et une deuxième position associée à la deuxième configuration de classe de confort, **caractérisée par** une unité (80) de verrouillage destinée à un verrouillage dans au moins une des configurations de classe de confort et par une unité (86) de commande destinée à déverrouiller le moyen (50) de conversion et l'unité (76) de siège simultanément.

2. Unité de siège passager selon la revendication 1, **caractérisée par** une unité (90) d'actionnement qui déplace automatiquement le moyen (50) de conversion lors d'un actionnement de l'unité (86) de commande.

3. Unité de siège passager selon l'une des revendications précédentes, **caractérisée en ce que** l'unité (46) de guidage comprend au moins un moyen (48) de guidage et le moyen (50) de conversion est formé par une unité (38) d'appuie-tête qui peut être guidée par le moyen (48) de guidage.

4. Unité de siège passager selon la revendication 3, **caractérisée en ce que** l'unité (38) d'appuie-tête comprend une unité (40) de support pour supporter un rembourrage (42) d'appuie-tête, l'unité (40) de support étant couplée au moyen (48) de guidage.

5. Unité de siège passager selon l'une des revendications précédentes, **caractérisée en ce que** l'unité (46) de guidage comporte au moins un moyen (48) de guidage formé comme barre de guidage.

6. Unité de siège passager selon l'une des revendications précédentes, **caractérisée en ce que** l'unité (46) de guidage comprend un premier moyen (48) de guidage et au moins un deuxième moyen (58) de guidage, dans lequel le premier moyen (48) de guidage peut être introduit.

7. Unité de siège passager selon l'une des revendications précédentes, **caractérisée par** une unité (52) de cadre de structure de dossier de l'unité (28) de dossier, cette unité (52) de cadre formant au moins un moyen (58) de guidage de l'unité (46) de guidage.

8. Unité de siège passager selon les revendications 6 et 7, **caractérisée en ce que** l'unité (52) de cadre forme le deuxième moyen (58) de guidage.

9. Unité de siège passager selon la revendication 7 ou 8, **caractérisée en ce que** le moyen (58) de guidage formé par l'unité (52) de cadre est formé par un élément vertical (54) de cadre de l'unité (52) de cadre.

10. Unité de siège passager selon l'une des revendications 7 à 9, **caractérisée en ce que** l'unité (52) de cadre forme deux moyens (58.1, 58.2) de guidage qui sont reliés entre eux par un élément (57) de torsion.

11. Unité de siège passager selon l'une des revendications précédentes, **caractérisée par** une unité (90) d'actionnement qui pivote automatiquement l'unité (76) de siège lors d'un actionnement de l'unité (86) de commande.

12. Unité de siège passager selon la revendication 2 ou 11, **caractérisée en ce que** l'unité (90) d'actionnement comporte une unité (92, 96) de ressort.

13. Unité de siège passager selon la revendication 12, **caractérisée en ce que** l'unité de ressort (92, 96) comporte un ressort pneumatique (94, 98).

## Patentansprüche

1. Fahrgastsitzeinheit für ein Transportmittel mit mindestens zwei Komfortklassen, insbesondere Fahrgastsitzeinheit für ein Luftfahrzeug, die eine Sitzeinheit (76) aufweist und eine Umwandlungseinheit (20), die für eine Umwandlung einer ersten Komfortklassenkonfiguration in eine zweite Komfortklassenkonfiguration bestimmt ist, wobei die Umwandlungseinheit (20) mindestens ein Umwandlungsmittel (50) und eine Führungseinheit (46) aufweist, die dazu bestimmt ist, das Umwandlungsmittel (50) in einer Bewegung relativ zu einer Rückenlehneneinheit (28) bei einem Umwandlungsvorgang zu führen, wobei die Führungseinheit (46) dazu vorgesehen ist, das Umwandlungsmittel (50) derart zu führen, dass es eine translatorische Bewegung in Bezug zu der Rückenlehneneinheit (28) ausführt, wobei die Sitzeinheit (76) in Bezug zu der Rückenlehneneinheit (28) zwischen einer ersten Position, die zu der ersten Komfortklassenkonfiguration gehört, und einer zweiten Position, die zu der zweiten Komfortklassenkonfiguration gehört, schwenkbar befestigt ist, **gekennzeichnet durch** eine Verriegelungseinheit (80), die zu einem Verriegeln in mindestens einer der Komfortklassenkonfigurationen bestimmt ist, und **durch** eine Bedieneinheit (86), die dazu bestimmt ist, das Umwandlungsmittel (50) und die Sitzeinheit (76) gleichzeitig zu entriegeln.

2. Fahrgastsitzeinheit nach Anspruch 1, **gekennzeichnet durch** eine Betätigungseinheit (90), die das Umwandlungsmittel (50) bei einem Betätigen der Bedieneinheit (86) automatisch verlagert.

3. Fahrgastsitzeinheit nach einem der vorhergehenden Ansprüche, **dadurch gekennzeichnet, dass** die Führungseinheit (46) mindestens ein Führungsmittel (48) aufweist und dass das Umwandlungsmittel (50) aus einer Kopfstützeneinheit (38) gebildet ist, die von dem Führungsmittel (48) geführt werden kann.

4. Fahrgastsitzeinheit nach Anspruch 3, **dadurch gekennzeichnet, dass** die Kopfstützeneinheit (38) eine Trageinheit (40) aufweist, um eine Kopfstützenpolsterung (42) zu tragen, wobei die Trageinheit (40) mit dem Führungsmittel (48) gekoppelt ist.

5. Fahrgastsitzeinheit nach einem der vorhergehenden Ansprüche, **dadurch gekennzeichnet, dass** die Führungseinheit (46) mindestens ein Führungsmittel (48), das als eine Führungsstange ausgebildet ist, aufweist.

6. Fahrgastsitzeinheit nach einem der vorhergehenden Ansprüche, **dadurch gekennzeichnet, dass** die Führungseinheit (46) ein erstes Führungsmittel (48) und mindestens ein zweites Führungsmittel (58) aufweist, in welches das erste Führungsmittel (48) eingeführt werden kann.

7. Fahrgastsitzeinheit nach einem der vorhergehenden Ansprüche, **gekennzeichnet durch** eine RückenlehnenRahmenstruktureinheit (52) der Rückenlehneneinheit (28), wobei diese Rahmeneinheit (52) mindestens ein Führungsmittel (58) der Führungseinheit (46) bildet.

8. Fahrgastsitzeinheit nach den Ansprüchen 6 und 7, **dadurch gekennzeichnet, dass** die Rahmeneinheit (52) das zweite Führungsmittel (58) bildet.

9. Fahrgastsitzeinheit nach Anspruch 7 oder 8, **dadurch gekennzeichnet, dass** das Führungsmittel (58), das von der Rahmeneinheit (52) gebildet wird, aus einem vertikalen Rahmenelement (54) der Rahmeneinheit (52) gebildet wird.

10. Fahrgastsitzeinheit nach einem der Ansprüche 7 bis 9, **dadurch gekennzeichnet, dass** die Rahmeneinheit (52) zwei Führungsmittel (58.1, 58.2) bildet, die miteinander durch ein Torsionselement (57) verbunden sind.

11. Fahrgastsitzeinheit nach einem der vorhergehenden Ansprüche, **gekennzeichnet durch** eine Betätigungseinheit (90), die die Sitzeinheit (76) automatisch bei einem Betätigen der Bedieneinheit (86) schwenkt.

12. Fahrgastsitzeinheit nach Anspruch 2 oder 11, **dadurch gekennzeichnet, dass** die Betätigungseinheit (90) eine Federeinheit (92, 96) aufweist.

13. Fahrgastsitzeinheit nach Anspruch 12, **dadurch gekennzeichnet, dass** die Federeinheit (92, 96) eine pneumatische Feder (94, 98) aufweist.

## Claims

1. Passenger seat unit for a means of transport having at least two comfort classes, particularly passenger seat unit for an aircraft, comprising a seat unit (76) and a conversion unit (20) for converting from a first comfort class configuration into a second comfort class configuration, the conversion unit (20) comprising at least one conversion means (50) and a guide unit (46) provided for guiding the conversion means (50) in a movement relative to a backrest unit (28) during a conversion operation, the guide unit (46) being provided for guiding the conversion means (50) so as to effect a translational movement relative to the backrest unit (28), the seat unit (76) being pivotably mounted relative to the backrest unit (28) between a first position associated with the first comfort class configuration and a second position associated with the second comfort class configuration, **characterized by** a locking unit (80) provided for locking in at least one of the comfort class configurations and by a control unit (86) provided for unlocking the conversion means (50) and the seat unit (76) simultaneously.

2. Passenger seat unit according to Claim 1, **characterized by** an actuating unit (90) which automatically moves the conversion means (50) upon actuation of the control unit (86).

3. Passenger seat unit according to one of the preceding claims, **characterized in that** the guide unit (46) comprises at least one guide means (48) and the conversion means (50) is formed by a headrest unit (38) which can be guided by the guide means (48).

4. Passenger seat unit according to Claim 3, **characterized in that** the headrest unit (38) comprises a support unit (40) for supporting a headrest padding (42), the support unit (40) being coupled to the guide means (48).

5. Passenger seat unit according to one of the preceding claims, **characterized in that** the guide unit (46) comprises at least one guide means (48) formed as a guide bar.

6. Passenger seat unit according to one of the preceding claims, **characterized in that** the guide unit (46) comprises a first guide means (48) and at least a second guide means (58) into which the first guide means (48) can be introduced.

7. Passenger seat unit according to one of the preceding claims, **characterized by** a backrest structure frame unit (52) of the backrest unit (28), said frame unit (52) forming at least one guide means (58) of the guide unit (46).

8. Passenger seat unit according to Claims 6 and 7, **characterized in that** the frame unit (52) forms the second guide means (58).

9. Passenger seat unit according to Claim 7 or 8, **characterized in that** the guide means (58) formed by the frame unit (52) is formed by a vertical frame element (54) of the frame unit (52).

10. Passenger seat unit according to one of Claims 7 to 9, **characterized in that** the frame unit (52) forms two guide means (58.1, 58.2) which are connected to one another by a torsion element (57).

11. Passenger seat unit according to one of the preceding claims, **characterized by** an actuating unit (90) which automatically pivots the seat unit (76) upon actuation of the control unit (86).

12. Passenger seat unit according to Claim 2 or 11, **characterized in that** the actuating unit (90) comprises a spring unit (92, 96).

13. Passenger seat unit according to Claim 12, **characterized in that** the spring unit (92, 96) comprises a pneumatic spring (94, 98).
